# EUROPÄISCHE PATENTSCHRIFT

(11) **EP 1 187 866 B1**
(45) Veröffentlichungstag und Bekanntmachung des Hinweises auf die Patenterteilung: **13.04.2005**
(21) Anmeldenummer: 00922531.9
(22) Anmeldetag: 20.03.2000
(51) Int. Cl.: C08G 61/08, B23K 26/06

(54) **VERFAHREN ZUR HERSTELLUNG VON MIKROSTRUKTURIERTEN BAUTEILEN**
PROCESS FOR THE PREPARATION OF MICROSTRUCTURED COMPONENTS
PROCEDE POUR LA PREPARATION DE COMPOSANTS MICROSTRUCTURES

(30) Priorität: 08.04.1999 DE 19915715
(43) Veröffentlichungstag der Anmeldung: 20.03.2002
(73) Patentinhaber: Ticona GmbH, 65451 Kelsterbach (DE)
(72) Erfinder: JACOBS, Alexandra, D-65527 Niedernhausen (DE); BERGER, Klaus, D-65843 Sulzbach (DE); SABBERT, Dirk, D-38108 Braunschweig-Dibbesdorf (DE); LANDSIEDEL, Jörg, D-63517 Rodenbach (DE)
(86) Internationale Anmeldenummer: PCT/EP2000/002449
(87) Internationale Veröffentlichungsnummer: WO 2000/061656

(56) Entgegenhaltungen:
- WO-A-96/33839
- DE-A- 4 328 133
- US-A- 5 498 677
- US-A- 5 583 192
- CHANG T -C ET AL: "Excimer Pulsed Laser Ablation of Polymers in Air and Liquids for Micromachining Applications" JOURNAL OF MANUFACTURING SYSTEMS,US,SOCIETY OF MANUFACTURING ENGINEERING, DEARBORN, MI, Bd. 18, Nr. 2, 1999, Seiten 1-17, XP004174227 ISSN: 0278-6125

## Beschreibung

Die vorliegende Erfindung betrifft ein Verfahren zur Herstellung von mikrostrukturierten Bauteilen enthaltend mindestens ein Cycloolefincopolymer, ein Verfahren zur Herstellung dieser mikrostrukturierten Bauteile sowie die Verwendung dieser mikrostrukturierten Bauteile.

Aus DD-A-211 801 und DD-A-211 802 sind Verfahren zur Modifizierung der Oberflächeneigenschaften von Olefincopolymeren als Halbzeuge und Formstoffe bekannt. Die Halbzeuge und Formstoffe enthalten Ethylen-Norbornen-Copolymer oder eine Kombination aus Ethylen-Norbornen-Copolymer mit Thermoplasten, Füllstoffen, Verstärkerstoffen und Plasthilfsstoffen. Die Modifizierung wird durchgeführt durch Behandlung mit ionisierender Strahlung oder durch chemische Ätzung. Durch die Behandlung wird eine Verbesserung der Verklebbarkeit, Bedruckbarkeit, Metallisierbarkeit und der Haftung von Lackschichten auf der Oberfläche des Halbzeugs oder Formstoffs erreicht. Dabei wird bei einer Temperatur von 340 K bis 410 K gearbeitet.

Aus US-A-5,334,424 ist bekannt, daß bei Artikeln auf Basis von gesättigten Norbornenharzen, die Oberflächenrauhigkeit durch Polieren auf < 0,05 µm reduziert werden kann.

In Journal of Photopolymer Science and Technology, Volume 10, Nr. 2 (1997) 159-166 werden Verfahren beschrieben, die auf der Wechselwirkung von Laserstrahlung mit Polymeren basieren.

Aus Y. Nakayama, T. Matsuda in J. Biomed. Res., 29, 1295 (1995) sind Abtragungsraten bei einem Energiefluß von 1 J/cm² mit Excimer-Lasern bekannt.

Die Aufgabe der vorliegenden Erfindung liegt darin, ein wirtschaftliches und umweltfreundliches Verfahren zur Herstellung von mikrostrukturierten Bauteilen mit sehr fein abgestuftem Höhenprofil und sehr geringer Oberflächenrauhigkeit bereitzustellen. Unter mikrostrukturierten Bauteilen werden Bauteile verstanden, die Strukturen im Mikrometer-Bereich und darunter aufweisen.

Die Aufgabe der vorliegenden Erfindung wird durch ein Verfahren zur Herstellung von mikrostrukturierten Bauteilen gelöst, die Cycloolefincopolymere enthalten, wobei die Bearbeitung des Materials miltels Laserstrahlung erfolgt.

Die mikrostrukturierten Bauteile enthalten mindestens ein Cycloolefincopolymer, welches polymerisierte Einheiten enthält, die sich von mindestens einem cyclischen, insbesondere polycyclischen Olefin und gegebenenfalls von mindestens einem acyclischen Olefin ableiten. Der Begriff Cycloolefinpolymer umfaßt Cycloolefincopolymere wie auch Cycloolefinhomopolymere.

Die mikrostrukturierten Bauteile enthalten mindestens ein Cycloolefincopolymer, enthaltend 0,1 bis 100 Gew.-%, bevorzugt 0,1 bis 99,9 Gew.-%, bezogen auf die Gesamtmasse des Cycloolefincopolymers, polymerisierte Einheiten, welche sich ableiten von mindestens einem polycyclischen Olefin der Formeln I, II, II', III, IV, V oder VI 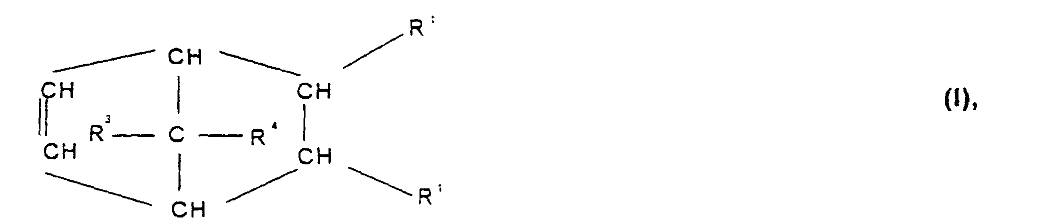 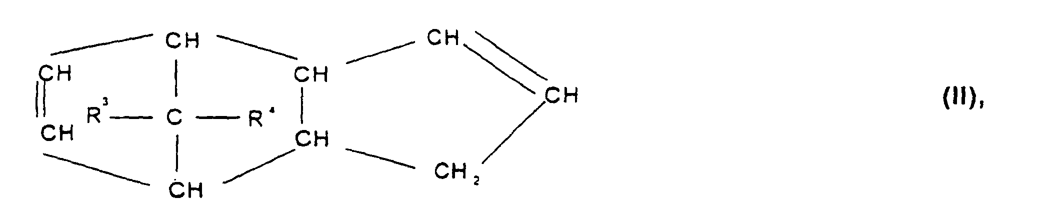 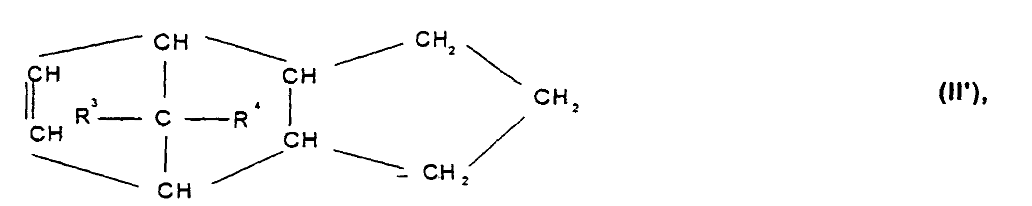 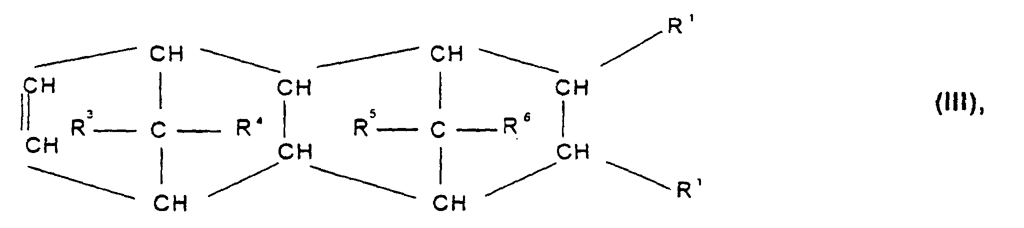 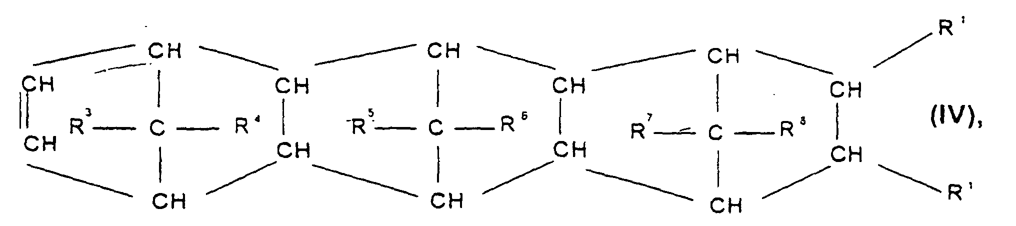 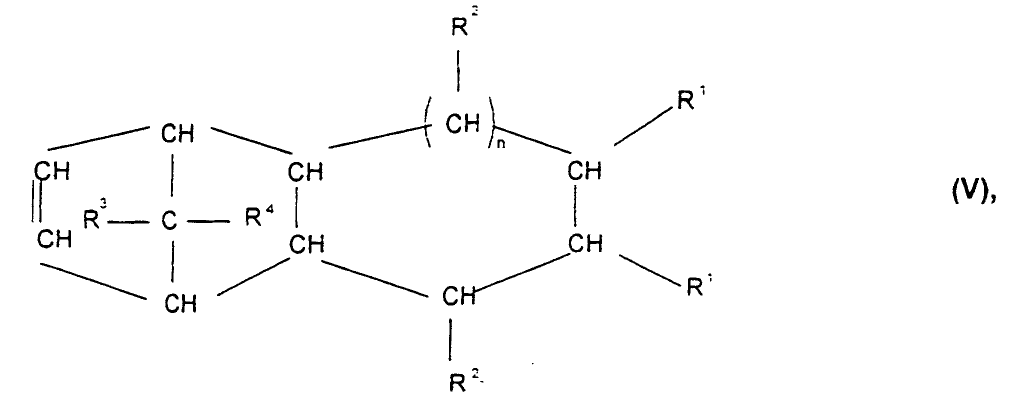 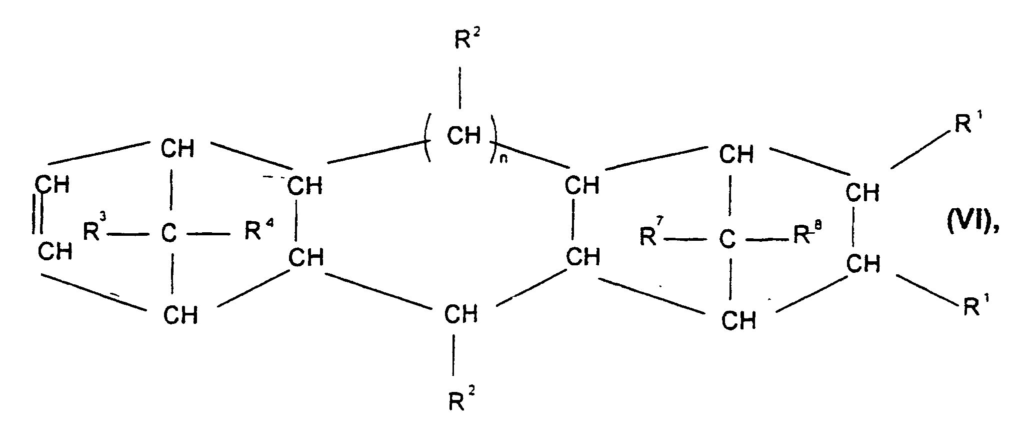 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0 bis 99,9 Gew.-%, bevorzugt 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII 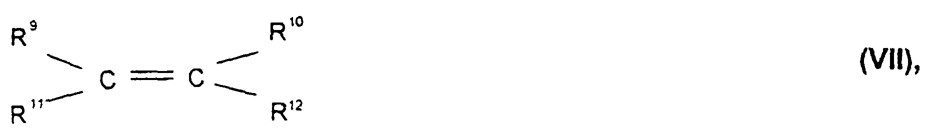 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Außerdem können die für mikrostrukturierte Bauteile verwendeten Cycloolefincopolymere 0 bis 45 Gew.-%, bezogen auf die Gesamtmasse des Cycloolefincopolymers, polymerisierte Einheiten enthalten, welche sich ableiten von einem oder mehreren monocyclischen Olefinen der Formel VIII 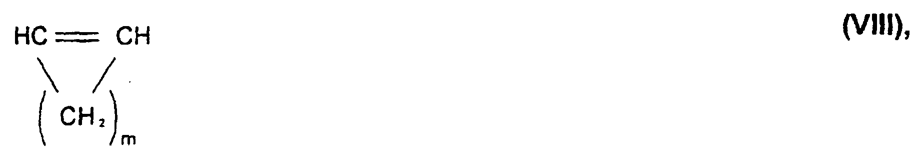 worin m eine Zahl von 2 bis 10 ist.

Bevorzugt sind Cycloolefincopolymere, die polymerisierte Einheiten enthalten, welche sich ableiten von polycyclischen Olefinen der Formeln I oder III, und polymerisierte Einheiten, welche sich ableiten von acyclischen Olefinen der Formel VII.

Besonders bevorzugt sind Cycloolefincopolymere, die polymerisierte Einheiten enthalten, welche sich ableiten von Olefinen mit Norbornengrundstruktur, ganz besonders bevorzugt von Norbornen und Tetracyclododecen und gegebenenfalls Vinyinorbornen oder Norbomadien. Besonders bevorzugt sind auch Cycloolefincopolymere, die polymerisierte Einheiten enthalten, welche sich ableiten von acyclischen Olefinen mit endständigen Doppelbindungen wie α-Olefinen mit 2 bis 20 C-Atomen, ganz besonders bevorzugt Ethylen oder Propylen. Außerordentlich bevorzugt sind Norbornen/ Ethylen- und Tetracyclododecen/ Ethylen-Copolymere.

Die erfindungsgemäß verwendeten Cycloolefincopolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefincopolymere geeignet sind, sind beschrieben in EP-A-407 870, EP-A-485 893 und EP-A-503 422. Auf diese Referenzen wird hier ausdrücklich Bezug genommen.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-inclenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
rac-Isopropyliden-bis-(1-indenyl)zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsityl-(cyclopentadienyl)-(1-indenyl)-zirkondichlorid,
Isopropylen-(methylcyclopentadienyl)-(1-indenyl)-zirkondichlorid, 4-(η⁵-cyclopentadienyl)-4,7,7-trimethyl-(η⁵-4,5,6,7-tetrahydroindenyl-zirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl)]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichlorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid,
[2,2,4Trimethyl-4-(η⁵-cyclopentadienyl)-(η⁵-4,5-tetrahydropentalen)]zirkoniumdichlorid,
[2,2,4Trimethyl-4-(η⁵-(3,4-Di-isopropyl)cyclopentadienyl)-(η⁵-4,5-tetrahydropentalen)]-zirkoniumdichlorid.

Die Herstellung der Cycloolefincopolymere geschieht durch eine heterogene oder homogene Katalyse mit metallorganischen Verbindungen und ist in einer Vielzahl von Patenten beschrieben. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von Cycloolefincopolymeren beschriebenen Herstellungsverfahren und verwendeten Katalysatorsysteme wird hiermit ausdrücklich hingewiesen.

Die Herstellung erfindungsgemäß verwendeter Cycloolefincopolymere kann durch Homo- und/oder Copolymerisation cyclischer, bevorzugt polycyclicher Olefine unter Ringerhalt erfolgen.

Die Cycloolefincopolymere können auch durch ringöffnende Polymerisation mindestens eines der Monomere der Formeln I bis VI und anschließende Hydrierung der erhaltenen Produkte hergestellt werden. Gegebenenfalls können die Cycloolefincopolymere auch durch ringöffnende Copolymerisation mindestens eines der Monomere der Formeln I bis VI mit weiteren, z.B. monocyclischen Monomeren der Formel VIII und anschließende Hydrierung der erhaltenen Produkte hergestellt werden. Die Herstellung der Cycloolefincopolymere ist in den japanischen Patenten 3-14882, 3-122137, 4-63807, 2-27424 und 2-276842 beschrieben. Auf die in diesen Patenten zur Herstellung von Cycloolefincopolymeren beschriebenen Herstellungsverfahren und verwendeten Katalysatorsysteme wird hiermit ausdrücklich hingewiesen. Eingeschlossen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen

Die Polymerisation kann auch mehrstufig erfolgen, wobei auch Blockcopolymere entstehen können (DE-A-42 05 416).

Cycloolefincopolymere sind bevorzugt amorphe, transparente Werkstoffe. Die Wärmeformbeständigkeiten der Cycloolefincopolymere lassen sich in einem weiten Bereich einstellen. Als Anhaltspunkt für die Wärmeformbeständigkeit, wie sie nach ISO 75 Teil 1 und Teil 2 an Spritzgußformkörpern bestimmt werden kann, läßt sich für Cycloolefincopolymere die Glasübergangstemperatur heranziehen. Die beschriebenen Cycloolefincopolymere weisen Glasübergangstemperaturen zwischen -50 und 220 °C auf. Bevorzugt sind Glasübergangstemperaturen zwischen 0 und 180 °C, besonders bevorzugt sind Glasübergangstemperaturen zwischen 40 und 180 °C.

Die mittlere Molmasse der Cycloolefincopolymere läßt sich durch Wasserstoff-Dosierung, Variation der Katalysatorkonzentration oder Variation der Temperatur in bekannter Weise steuern. Die in den erfindungsgemäßen mikrostrukturierten Bauteilen enthaltenen Cycloolefincopolymere weisen massenmittiere Molmassen Mw zwischen 1.000 und 10.000.000 g/mol auf. Bevorzugt sind massenmittlere Molmassen Mw zwischen 5.000 und 5.000.000 g/mol, besonders bevorzugt sind massenmittlere Molmassen Mw zwischen 10.000 und 1.200.000 g/mol.

Die in den mikrostrukturierten Bauteilen enthaltenen Cycloolefincopolymere weisen Viskositätszahlen zwischen 5 und 1.000 ml/g auf. Bevorzugt sind Viskositätszahlen zwischen 20 und 500 ml/g, besonders bevorzugt sind Viskositätszahlen zwischen 30 und 300 ml/g.

Die mikrostrukturierten Bauteile können auch Legierungen aus mindestens einem Cycloolefincopolymer und mindestens einem weiteren Polymer in beliebigem Mischungsverhältnissen enthalten.

Für die Legierungen mit Cycloolefincopolymeren sind bevorzugt folgende Polymere einsetzbar:

Polyethylen, Polypropylen, Ethylen-Propylen-Copolymere, Polybutylen, Poly (4 - methyl-1 -penten), Polyisopren, Polyisobutylen, Naturkautschuk, Poly (1 - methylenmetacrylat), weitere Polymetacrylate, Polyacrylat, Acrylat - Metacrylat - Copolymere, Polystyrol, Styrol - Acrylnitril - Copolymer, Bisphenol -A - Polycarbonat, weitere Polycarbonate, aromatische Polyestercarbonate, Polyethylenterephthalat, Polybutylenterephthalat, amorphe Polyacrylat, Nylon - 6, Nylon - 66, weiter Polyamide, Polyaramide, Polyetherketone, Polyoxymethylen, Polyoxyethylen, Polyurethane, Polysulfone, Polyethersulfone, Polyvinyledenfluorid.

Für Legierungen von Cycloolefincopolymeren und Polyolefinen werden bevorzugt folgende Polyolefine eingesetzt: Homopolymere des Ethylens und Propylens sowie Copolymere aus diesen beiden Monomeren, Copolymere auf der Basis von Ethylen mit linearen oder verzweigten Olefinen, wie Buten, Penten, Hexen, Hepten, Octen, Nonen, Decen, Undecen und Dodecen, Copolymere auf der Basis von Propylen mit linearen oder verzweigten Olefinen, wie Buten, Penten, Hexen, Hepten, Octen, Nonen, Decen, Undecen und Dodecen, Terpolymere aus Ethylen, Propylen und linearen oder verzweigten Olefinen, wie Buten, Penten, Hexen, Hepten, Octen, Nonen, Decen, Undecen und Dodecen.

Die Herstellung der Legierungen kann durch übliche Verfahren erfolgen, z.B. durch gemeinsame Extrusion der Polymerkomponenten aus der Schmelze, gegebenenfalls unter Verwendung weiterer Additive, und anschließende Granulierung.

Cycloolefincopolymere lassen sich aus der Schmelze oder auch aus der Lösung verarbeiten. Geeignete Lösungsmittel sind aprotische unpolare Kohlenwasserstoffe wie Dekalin oder Gemische aus linearen und verzweigten Kohlenwasserstoffen.

Die Herstellung der mikrostrukturierten Bauteile kann durch Herstellung des eigentlichen Bauteils und gleichzeitige Mikrostrukturierung erfolgen, z.B. durch thermoplastische Verarbeitungsverfahren wie Spritzguß. Damit eignet sich auch das LIGA-Verfahren, eine Kombination von Lithographie, Galvanoformung und Abformung zur Herstellung solcher Mikrostrukturbauteile. Eine andere Möglichkeit ist die Mikrostrukturierung des bereits vorgefertigten Bauteils z.B. durch Ätzprozesse wie naßchemisches Ätzen oder Trockenätzprozesse, durch Prägeprozesse wie Heißprägen, durch Materialbearbeitung durch Laserstrahlung wie Laserablation durch Excimer-Laser oder Mikroschweißen, durch Verfahren der Feinmechanik wie spanabhebende Bearbeitung oder Funkenerosion oder durch Photolithographie.

Es wurde überraschend gefunden, daß Cycloolefincopolymere bei der Herstellung der mikrostrukturierten Bauteile durch Laserablation besonders niedrige Abtragungsraten zeigen. Cycloolefincopolymere sind somit überraschenderweise besonders für mikrostrukturierte Bauteile mit sehr feinen Profilen geeignet. Ganz besonders geeignet sind Cycloolefincopolymere für mikrostrukturierte Bauteile mit Profilen, deren Höhenunterschieden kleiner 500 nm sind.

Eine wichtige Größe für mikromechanische Anwendungen ist der Wandwinkel α der ablatierten Struktur. Der Winkel wird als positiv bezeichnet, wenn die in der Tiefe erzeugte Fläche kleiner als die an der Oberfläche ist, und als negativ, wenn die Verhältnisse umgekehrt sind. Senkrechte Wände sind in der Mikrostrukturierung besonders von Bedeutung. Gegebenenfalls sind jedoch auch positive Wandwinkel gefordert, da positive Wandwinkel α das Entformen in den sich der Galvanoformung anschließenden Replikationsprozessen erleichtern.

Es wurde überraschenderweise festgestellt, daß sich Cycloolefincopolymere besonders für mikrostrukturierte Bauteile eignen, da sowohl Wandwinkel α=0 wie auch positive Wandwinkel durch Wahl geeigneter Herstellungsbedingungen erhalten werden können. Hier zeichnen sich Cycloolefincopolymere ebenfalls gegenüber anderen Werkstoffen wie z.B. PMMA aus.

Bevorzugt wird das Laserablatieren von Cycloolefinpolymeren mittels Laserstrahlung einer Energiedichte größer gleich 1,0 J/cm², besonders bevorzugt mit einer Energiedichte größer gleich 1,5 J/cm², durchgeführt. Bis diesen Energiedichten liegt die Abtragsrate pro Laserpuls im sogenannten Sättigungsbereich, d. h. die maximale Abtragung pro Laserpuls ist gewährleistet. Das Laserablatieren im Sättigungsbereich hat den Vorteil, daß insbesondere bei Energiedichten größer gleich 1,0 J/cm² die erzielten Abtragungsergebnisse sehr gut reproduzierbar sind und insbesondere bei Energiedichten größer gleich 1,5 J/cm² Strukturen mit senkrechten Wänden erzielt werden. Beim Laserablatieren herkömmlicher polymerer Materialien, wie PMMA, können ebenfalls geringe Abtragungsraten erhalten werden, jedoch ist hierzu mit Energiedichten deutlich unter den im Sättigungsbereich liegenden Energiedichten zu arbeiten. Dies führt jedoch zu vergleichsweise schlecht reproduzierbaren Abtragungsergebnissen, sowie zu Strukturen mit geneigten Wänden.

Bei kurzwelliger ultravioletter Bestrahlung eines polymereren Werkstoffs, wird oberhalb einer kritischen Energiedichte durch photoinduzierte und thermische Zersetzung Materie von der Oberfläche entfernt. Beim Laserablatieren von Cycloolefinpolymeren wird vorzugsweise mit Laserstrahlung kleiner gleich 350 nm gearbeitet. Ein gewisser Anteil der abgetragenen Materie lagert sich wieder auf der Oberfläche ab, die sogenannte Debris.

Mikrostrukturierte Bauteile, die durch Laserablation hergestellt wurden, zeigten bei Untersuchungen mit dem Rasterelektronen- und dem Lichtmikroskop überraschenderweise fast keine Debris, wenn die erzeugten Löcher weniger als 200 µm tief waren. Erst bei tieferen Strukturen wurden Partikel mit einem Durchmesser kleiner 100 nm in der Nähe der erzeugten Strukturen beobachtet. Die Oberflächenrauhigkeit der erfindungsgemäßen mikrostrukturierten Bauteile ist insbesondere an den Strukturwänden vergleichsweise gering.

Die hergestellten Bauteile weisen stark verbesserte Gebrauchseigenschaften, wie niedrige Dichte, hohe Transparenz bis < 300 nm, hohe Abbe-Zahl, geringe Doppelbrechung, außerordentlich geringe Wasseraufnahme, überragende Wasserdampfsperrwirkung abgestufte Wärmeformbestädigkeit (HDT/B) bis zu 170 °C, hohe Steifheit, Festigkeit und Härte, geringe Alterung bei Einwirkung von Wärme oder energiereicher Strahlung, gute Blutverträglichkeit, hervorragende Biokompatibilität, gute Sterilisierbarkeit mittels Heißdampf, Heißluft, Ethylenoxidgas und energiereicher Strahlung (Gamma- und Elektronenstrahlen), sehr gute elektrische Isolationseigenschaften, hohe Beständigkeit gegenüber Säuren, Laugen und polaren Lösungsmitteln, gute Einfärbbarkeit sowie sehr gute thermoplastische Verarbeitbarkeit/Fließfähigkeit auf.
Durch ihre hohe chemische Reinheit sind die mikrostrukturierten Bauteile hervorragend für mikrooptische oder beugungsoptische Anwendungen und für medizinische und biotechnische Bauteile oder Apparaturen wie die Kapillarelektrophorese geeignet. Hierzu weist das mikrostrukturierte Bauteil mindestens eine mikrooptische Struktur, wie beispielsweise Mikrolinsen, Wellenleiter oder Beugungsgitterstrukturen, bzw. mindestens eine Fluidführungsstruktur, wie beispielsweise kapillarartige Kanäle, Küvettenstrukturen, Reaktionsräume, Mischer- oder Filterstrukturen, auf.

Cycloolefinpolymere sind daher ganz besonders für die Herstellung von Mikrostrukturkörpern als Prototypen geeignet, die mit Hilfe der sogenannten Laser-LIGA-Technik die mit Hilfe der LIGA Technik vervielfältigt werden können, vgl. Arnold et al, Appl.Surface Sci. 86, 251 (1995). Hiernach wird eine Schicht aus einem Polymer mittels Laserstrahlung mikrostrukturiert, wobei zusätzlich eine feinwerk- oder/ und mikrotechnische Bearbeitung stattfinden kann. Nach Aufbringen einer dünnen metallischen Schicht auf die mikrostrukturierte Oberfläche wird ein Metall oder eine Legierung in einer ausreichenden Dicke galvanisch abgeschieden. Der so abgeschiedene metallische Körper kann, ggf. nach einer Oberflächenbearbeitung, als Formeinsatz zur abformtechnischen Herstellung von Mikrostrukturkörpern in großen Stückzahlen, beispielsweise unter Verwendung thermoplastischer Materialien mittels Spritzgießen, eingesetzt werden.

Es wurde überraschend festgestellt, daß Cycloolefincopolymere besonders geeignet sind für mikrostrukturierte Bauteilse mit sehr fein abgestuftem Höhenprofil. Ganz besonders gut geeignet sind Cycloolefincopolymere für mikrostrukturierte Bauteile mit feinen Profilen, deren Höhenunterschiede kleiner 500 nm sind. Dies ist vor allem für die Herstellung beugungsoptischer Elemente von Interesse, deren Eigenschaften mit zunehmender Anzahl an Strukturierungsschritten besser werden. Cycloolefincopolymere sind daher ganz besonders für die Herstellung von Prototypen geeignet.

Die mikrostrukturierten Bauteile sind für eine Vielzahl von Anwendungen geeignet, wie z.B. im Bereich Automobil für Sensoren und Regelungssyteme, im Bereich Information und Kommunikation für Systeme zur optischen Datenübertragung und -verarbeitung wie Koppler, Verbindungselemente, Elemente zur Verzweigung von Strahlengängen und optische Schalter, für Datenspeicher, Systeme zur Bewegtbildprojektion, Mikrolinsen, im Bereich Medizintechnik für diagnostische Systeme, Zerstäubersysteme für Inhalatoren, Mikropumpen für Infusionssysteme, verschiedenste Implantate, Systeme zur minimal invasiven Chirurgie sowie im Bereich chemische Verfahrenstechnik/ Biotechnologie für Mikroreaktoren, statische Mischer, Pumpen, Dosier-, Filtrationssysteme, und Ventile.

Die Erfindung wird anhand der folgenden Beispiele näher erläutert.

### Beispiele

### Beispiel 1

### Herstellung des Cycloolefincopolymeren

In einem 70 dm³-Autoklav, der vorher mit Ethylen gespült wurde, wurde eine 50 Gew.-%ige Lösung von Norbornen in Exxsol vorgelegt. Durch mehrfaches Aufdrücken von Ethylen wurde die Lösung mit Ethylen gesättigt. In den vorbereiteten Reaktor wurde im Gegenstrom eine toluolische Methylaluminiumoxanlösung (10 Gew.-%ige Methylaluminiumoxanlösung der Molmasse 1300g/mol, nach kryoskopischer Bestimmung) dosiert und 30 Minuten bei 70 °C gerührt. Eine toluolische Lösung von insgesamt 100 mg Isopropylen-(cyclopentadienyl) -(1-indenyl)-zirkondichlorid wurde nach 30 minütiger Voraktivierung zugegeben. Unter Rühren-wurde eine Stunde polymerisiert, wobei der Ethylendruck von 20 bar durch Nachdosieren konstant gehalten wurde. Die Menge an Wasserstoff betrug 500 ppm. Nach Ende der Reaktionszeit wurde das Polymerisationsgemisch in ein Gefäß abgelassen und sofort in 300 dm³ Aceton eingetragen und 30 Minuten gerührt. Das ausgefallene Produkt wurde anschließend filtriert. Der Filterkuchen wurde je dreimal abwechselnd mit 10%-iger Salzsäure und Aceton gewaschen. Der Rückstand wurde in Aceton aufgeschlämmt und erneut filtriert. Das gereinigte Produkt wurde bei 70 °C im Vakuum (0,2bar) 24 Stunden getrocknet. Es wurde ein farbloses Polymer mit einer Vikositätszahl von 52 ml/g, einer Glasumwandlungstemperatur von 134 °C und einer mittleren Molmasse Mw = 30000g/mol erhalten. Das Polymer wird im folgenden als COC1 bezeichnet.

### Beispiel 2

### Herstellung der mikrostrukturierten Bauteile und Bestimmung der Abtragungsrate

Die erfindungsgemäße Herstellung von mikrostrukturierten Bauteilen erfolgte mit einer kommerziellen Excimerlaser-Bearbeitungsanlage (Exitech Serie7000). Die Arbeitsstation war mit einer Stahlungshomogenisierungsoptik und einem reflektierenden Schwarzschild-Objektiv zur Abbildung einer quadratischen Apertur ausgestattet. Die numerische Apertur betrug 0,28. Die gesamte Apparatur wurde computergesteuert. Ein ArF-Excimerlaser der Wellenlänge λ = 193 nm von Lambda Physik LPX 100i wurde verwendet. Die Ablationstiefe und die Oberflächenrauhigkeit der erzeugten Strukturen sowie der Wandwinkel wurden mit einem Wyco-Interferometer und einem Leica Lichtmikroskop vermessen, welches mit einer Mikrometerjustierung ausgestattet war. Die Ablationsempfindlichkeit wurde durch Korrelation der Ablationstiefe mit der Pulszahl und der Energiedichte ermittelt. Der Anteil an wiederabgelagertem Material (Debris) und dessen Struktur wurde qualitativ mit einem Leica Lichtmikroskop und einem Rasterelektronenmikroskop bestimmt.

Zunächst wurde aus dem COC1 eine 1 mm dicke Platte hergestellt. In die Platte wurde eine Matrix von 80 gleichartigen quadratischen Löchern von 300 µm * 300 µm strukturiert. Jedes Quadrat wurde mit der Excimer-Laserstrahlung bei einer variablen Zahl von Pulsen und Energiedichte bei einer konstanten Wiederholungsrate von 10 Hz bestrahlt. Die Pulsdauer betrug etwa 17 ns. Die Zahl der Pulse betrug 2, 5, 10, 20, 50, 100, 200, 500, 1000 und 3000. Die Energiedichten betrugen 0,2/ 0,4/ 0,6/ 0,8/ 1/ 1,2/ 1,4/ 1,8 J/cm². Auf diese Weise wurden die nachfolgend angegebenen Werte für die Ablationseigenschaft erhalten.

### Vergleichsbeipiel 1

Eine Probe Polymethylmethacrylat ( PMMA ) wurde zum Vergleich unter identischen Bedingungen wie im Beispiel 2 verarbeitet.

**Tabelle 1**

| Beispiele | Polymersubstrat | Abtragungsrate bei ε =1 J/cm² |
|---|---|---|
| | | [µm/Puls] |
| Beispiel 2 | COC1 (Cycloolefincopolymer) | 0,17 |
| Vergleichsbeispiel 1 | PMMA (Polymethylmethacrylat) | 0,58 |

Für beide polymere Materialien wurde eine Energiedichte, unterhalb der keine Abtragung erfolgt, (Abtragsschwelle) von etwa 0,05 J/cm² gemessen.

Der Vergleich zwischen dem erfindungsgemäßen Material gemäß Beispiel 1 und der Vergleichsprobe PMMA gemäß Vergleichsbeispiel 1 zeigt, daß im Bereich geringer Energiedichte die Abtragungsrate pro Puls bei COC1 mit dem Energiefluß sehr viel weniger ansteigt als bei PMMA. Der Plateauwert, der die maximale Abtragungsrate pro Puls darstellt, wird für COC1 sowie PMMA erst bei höheren Energiedichten ab etwa 0,7 J/cm² erreicht. Gemäß Tabelle 1 ist die maximale Abtragungsrate pro Puls bei COC1 mit 0,17 µm/Puls im Vergleich zu PMMA mit 0,58 µm/Puls sehr viel geringer.

### Beispiel 3

Bestimmung des Wandwinkels α Durchführung wie in Beispiel 2 beschrieben. Im Falle von COC1 ist der Wandwinkel unter den gegebenen Versuchsbedingungen eine Funktion der Energiedichte: Für kleine Energiedichten ist α positiv und nähert sich bei hohen Energiedichten zu null. Es bilden sich daher senkrechte Wände. Ab einer Energiedichte von 1,5J/cm² wird der Wandwinkel null.
Die Untersuchungen ergaben, daß keine Verzerrungen an den Ecken auftraten und die Wände der erzeugten Löcher eben waren.

### Vergleichsbeispiel 2

Eine Probe Polymethylmethacrylat ( PMMA ) wurde zum Vergleich unter identischen Bedingungen wie in Beispiel 3 verarbeitet. Im Gegensatz zu Beispiel 3 sind hier bei höheren Energiedichten negative Wandwinkel feststellbar.
- Vergleichswerte für PMMA:: α = 0° für ε =0,8 J/cm² und
α = -1° für ε >0,8 J/cm²

### Beispiel 4

### Bestimmung abgetragenen Materie und der Oberflächenrauhigkeit

Durchführung wie in Beispiel 2 beschrieben. Im Falle von COC1 zeigten die Untersuchungen mit dem Rasterelektronen- und dem Lichtmikroskop fast keine Debris, wenn die erzeugten Löcher weniger als 200 µm tief waren. Erst bei tieferen Strukturen wurden Partikel mit einem Durchmesser kleiner 100 nm in der Nähe der erzeugten Strukturen beobachtet.

Tabelle 3 zeigt, daß mit COC im Vergleich mit bisher verwendeten Polymeren geringe Oberflächenrauhigkeiten erhalten werden. PET (Polyethylenterphthalat) PET (Polyethylenterphthalat)

**Tabelle 2**

| Polymersubstrat | Maximale Rauhigkeit (maximaler Höhenunterschied) |
|---|---|
| | [nm] |
| COC1 (Cycloolefincopolymer) | <190 |
| PC (Polycarbonat) | 130 |
| PS (Polystyrol) | 130 |
| PET (Polyethylenterphthalat) | 390 |
| PMMA | 630 |
| Zeonex* | 250 |

| | |
|---|---|
| Werte aus eigenen Vergleichsmessungen. (* Zeonex: ein Cyclo-olefin Polymer der Nippon Zeon Co. Ltd.) | |

Die Oberflächenrauhigkeiten der durch optische Methoden zugänglichen Mikrostrukturen von PC, PS und PET wurden Roberts et al. Anal.Chem., 69, 2035 (1997) entnommen.

## Patentansprüche

1. Verfahren zur Herstellung von mikrostrukturierten Bauteilen, enthaltend als Material mindestens ein Cycloolefincopolymer enthaltend 0,1 - 100 Gew.-%, bezogen auf die Gesamtmasse des Cycloolefinpolymers, polymerisierte Einheiten, welche sich ableiten vonmindestens einem polycyclischen Olefin der Formeln I, II, II', III, IV, V oder VI 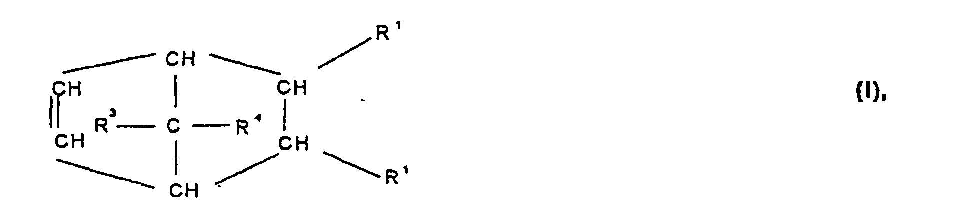 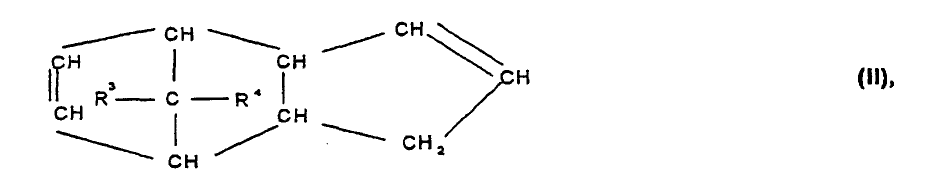 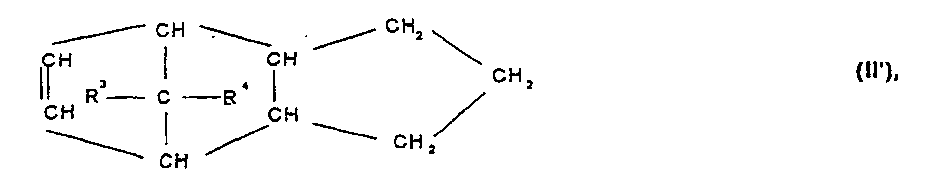 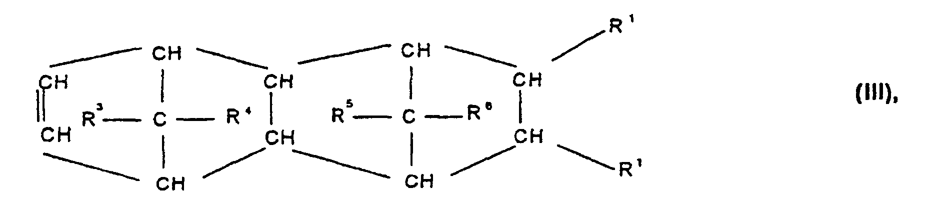 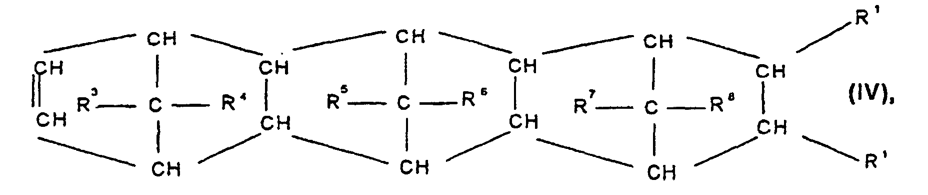 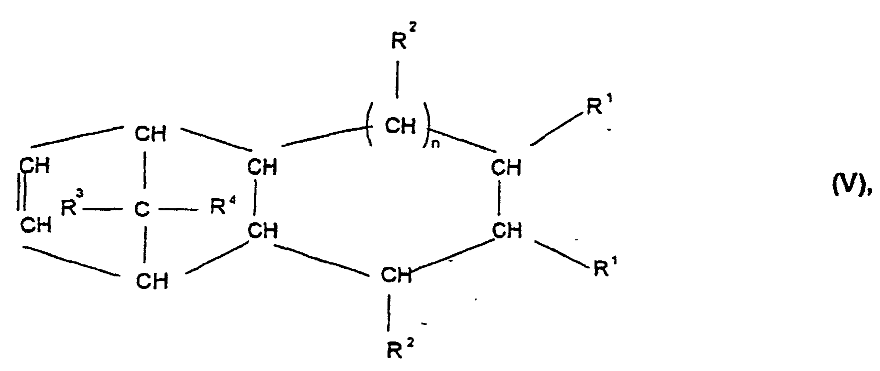 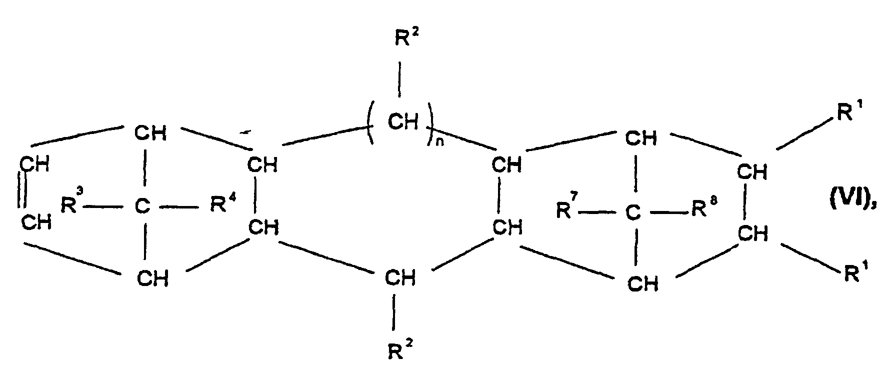 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0 bis 99,9 Gew-%, bezogen auf die Gesamtmasse des Cycloolefincopolymers, polymerisierte Einheiten, welche sich ableiten von einem oder mehreren acyclischen Olefinen der Formel VII 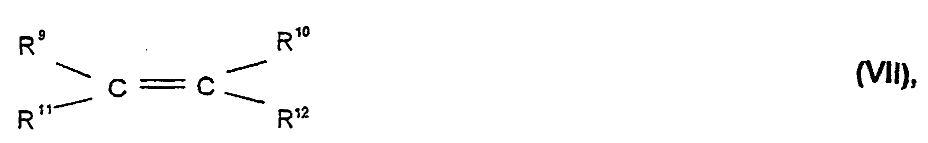 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten,und enthalten 0 bis 45 Gew.-%, bezogen auf die Gesamtzusammensetzung des Cycloolefincopolymers, polymerisierte Einheiten, welche sich ableiten von einem oder mehreren monocyclischen Olefinen der Formel VIII, 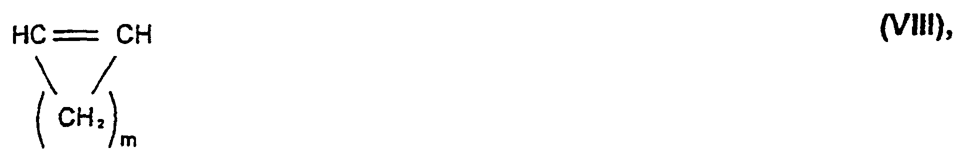 worin m eine Zahl von 2 bis 10 ist, **dadurch gekennzeichnet, daß** eine Bearbeitung des Materials mittels Laserstrahlung erfolgt.

2. Verfahren gemäß Anspruch 1, **dadurch gekennzeichnet, daß** Cycloolefincopolymere eingesetzt werden, die durch Polymerisation unter Ringerhalt der polycyclischen Monomere hergestellt werden.

3. Verfahren gemäß Anspruch 1 oder 2 **dadurch gekennzeichnet, daß** Cycloolefincopolymere eingesetzt werden, die 0,1 - 99,9 Gew.-%, bezogen auf die Gesamtmasse des Cycloolefinpolymers, polymerisierte Einheiten enthalten, welche sich ableiten von mindestens einem polycyclischen Olefin der Formeln I, II, II', III, IV, V oder VI, und 0 bis 99,9 Gew-%, bezogen auf die Gesamtmasse des Cycloolefincopolymers, polymerisierte Einheiten enthalten, welche sich ableiten von mindestens einem acyclischen Olefin der Formel VII.

4. Verfahren nach einem oder mehreren der Ansprüche 1 bis 3, wobei die Cycloolefincopolymere polymerisierte Einheiten enthalten, welche sich ableiten von einem oder mehreren polycyclischen Olefinen der Formeln I oder III und von einem oder mehreren α-Olefinen mit 2 bis 20 C-Atomen.

5. Verfahren nach einem oder mehreren der Ansprüche 1 bis 4, wobei die Cycloolefincopolymere Norbornen/ Ethylen oder Tetracyclodecen/ Ethylen-Copolymere darstellen.

6. Verfahren zur Herstellung mikrostrukturierter Bauteilen nach einem oder mehreren der Ansprüche 1 bis 5 , **dadurch gekennzeichnet, daß** Laserstrahlung einer Wellenlänge kleiner gleich 350 nm verwendet wird.

7. Verfahren nach einem oder mehreren der Ansprüche 1 bis 6, **dadurch gekennzeichnet, daß** die Energiedichte der Laserstrahlung auf größer gleich 1,0 J/cm² vorzugsweise auf größer gleich 1,5 J/cm², eingestellt wird.

8. Verwendung von mikrostrukturierten Bauteilen, die nach einem oder mehreren der Verfahren der Ansprüche 1 bis 7 hergestellt wurden, in den Bereichen Automobil, Information und Kommunikation, Medizintechnik, chemische Verfahrenstechnik und Biotechnologie.

9. Verwendung von mikrostrukturierten Bauteilen, die nach einem oder mehreren der Verfahren der Ansprüche 1 bis 7 hergestellt wurden für mikrooptische oder beugungsoptische Anwendungen, für medizinische und biotechnische Bauteile wie die Kapillarelektrophorese.

10. Verwendung von mikrostrukturierten Bauteilen, die nach einem oder mehreren der Verfahren der Ansprüche 1 bis 7 hergestellt wurden für Sensoren und Regelungssyteme, Systeme zur optischen Datenübertragung und -verarbeitung wie Koppler, Verbindungselemente, Elemente zur Verzweigung von Strahlengängen und optische Schalter, Datenspeicher, Systeme zur Bewegtbildprojektion, Mikrolinsen, diagnostische Systeme, Zerstäubersysteme für Inhalatoren, Mikropumpen für Infusionssysteme, verschiedenste Implantate, Systeme zur minimal invasiven Chirurgie, statische Mischer, Pumpen, Dosier-, Filtrationssysteme und Ventile.

## Claims

1. A process for producing microstructured components comprising as material at least one cycloolefin copolymer comprising 0.1-100% by weight, based on the total mass of the cycloolefin polymer, of polymerized units derived from at least one polycyclic olefin of the formula I, II, II', III, IV, V or VI 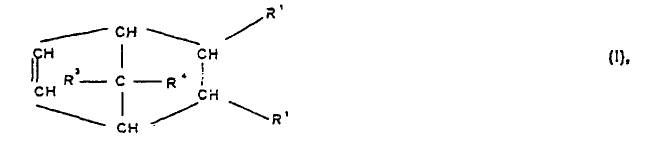 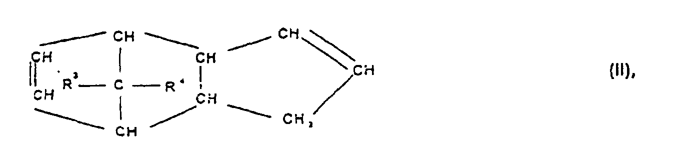 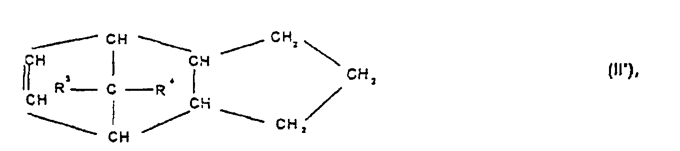 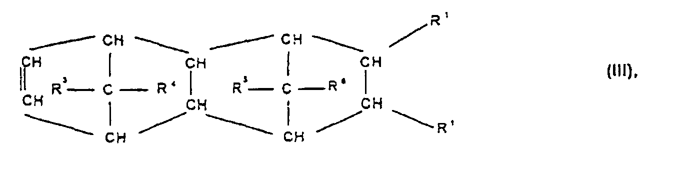 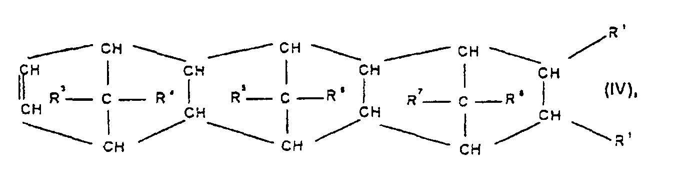 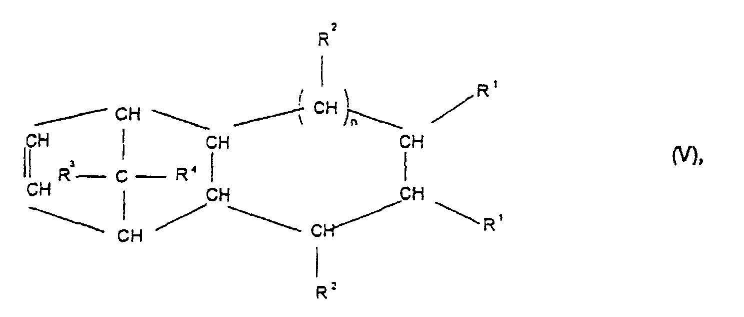 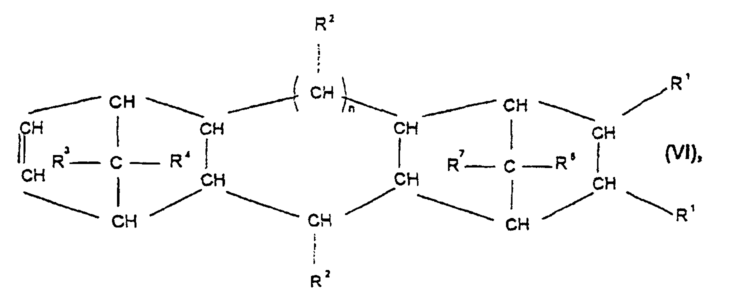 where R¹, R², R³, R⁴, R⁵, R⁶, R⁷ and R⁸ are identical or different and are each a hydrogen atom or a C₁-C₂₀-hydrocarbon radical such as a linear or branched C₁-C₈-alkyl radical, a C₆-C₁₈-aryl radical, a C₇-C₂₀-alkylenearyl radical, a cyclic or acyclic C₂-C₂₀-alkenyl radical or form a saturated, unsaturated or aromatic ring, where identical radicals R¹ to R⁸ in the various formulae I to VI may have different meanings, and n can be from 0 to 5, and from 0 to 99.9% by weight, based on the total mass of the cycloolefin copolymer, of polymerized units derived from one or more acyclic olefins of the formula VII 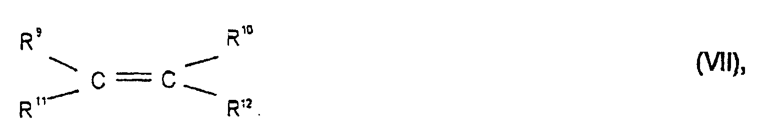 where R⁹, R¹⁰, R¹¹ and R¹² are identical or different and are each a hydrogen atom, a linear, branched, saturated or unsaturated C₁-C₂₀-hydrocarbon radical such as a C₁-C₈-alkyl radical or a C₆-C₁₈-aryl radical, and from 0 to 45% by weight, based on the total composition of the cycloolefin copolymer, of polymerized units derived from one or more monocyclic olefins of the formula VIII 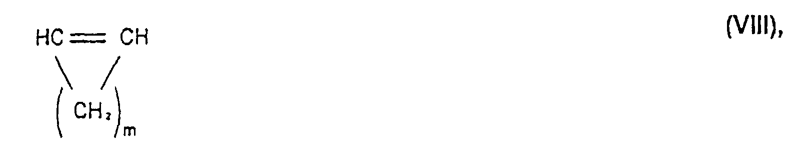 where m is from 2 to 10, wherein forming of the material by means of laser radiation is carried out.

2. The process as claimed in claim 1, wherein cycloolefin copolymers prepared by polymerization of polycyclic monomers with retention of the rings are used.

3. The process as claimed in claim 1 or 2, wherein cycloolefin copolymers comprising 0.1-99.9% by weight, based on the total mass of the cycloolefin polymer, of polymerized units derived from at least one polycyclic olefin of the formula I, II, II', III, IV, V or VI and from 0 to 99.9% by weight, based on the total mass of the cycloolefin copolymer, of polymerized units derived from at least one acyclic olefin of the formula VII are used.

4. The process as claimed in one or more of claims 1 to 3, wherein the cycloolefin copolymers comprise polymerized units derived from one or more polycyclic olefins of the formula I or III and from one or more α-olefins having from 2 to 20 carbon atoms.

5. The process as claimed in one or more of claims 1 to 4, wherein the cycloolefin copolymers are norbornene-ethylene or tetracyclodecene-ethylene copolymers.

6. The process for producing a microstructured component as claimed in one or more of claims 1 to 5, wherein laser radiation having a wavelength of less than or equal to 350 nm is used.

7. The process as claimed in one or more of claims 1 to 6, wherein the energy density of the laser radiation is set to greater than or equal to 1.0 J/cm², preferably greater than or equal to 1.5 J/cm².

8. The use of microstructured components which have been produced by one or more of the processes of claims 1 to 7 in the automobile sector, information and communication sector, medical technology, chemical process engineering and biotechnology.

9. The use of microstructured components which have been produced by one or more of the processes of claims 1 to 7 for applications in microoptics or diffraction optics, for medical and biotechnical components such as capillary electrophoresis.

10. The use of microstructured components which have been produced by one or more of the processes of claims 1 to 7 for sensors and regulating systems, systems for optical data transmission and processing such as couplers, connecting elements, elements for branching radiation beams and optical switches, data storages, systems for moving image projection microlenses, diagnostic systems, atomizer systems for inhalers, micropumps for infusion systems, various implants, systems for minimally invasive surgery, static mixers, pumps, metering systems, filtration systems and valves.

## Revendications

1. Procédé pour la préparation de pièces microstructurées, contenant comme matériau au moins un copolymère de cyclooléfine contenant 0,1 à 100% en poids, par rapport à la masse totale du polymère de cyclooléfine, d'unités polymérisées qui sont dérivées d'au moins une oléfine polycyclique des formules I, II, II', III, IV, V ou VI 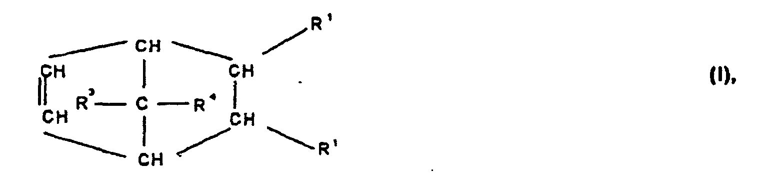 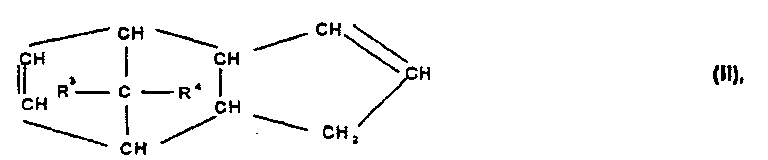 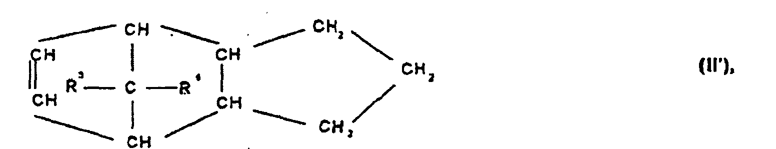 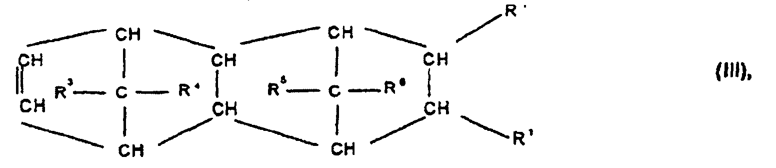 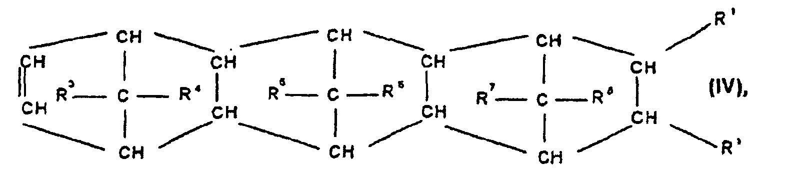 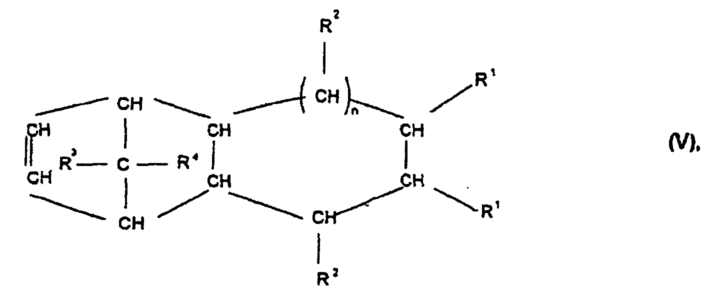 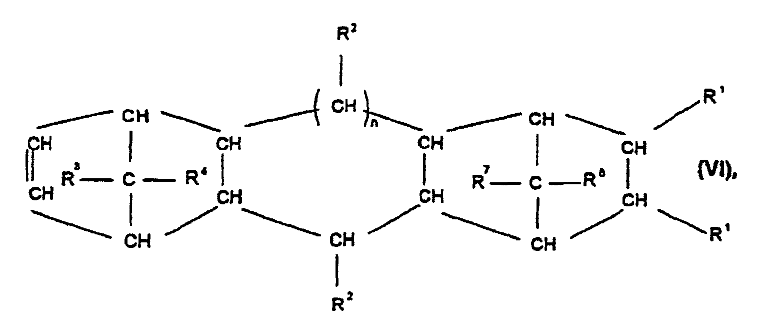 dans lesquelles R¹, R², R³, R⁴, R⁵, R⁶, R⁷ et R⁸ sont identiques ou différents et signifient un atome d'hydrogène ou un radical hydrocarboné en C₁ à C₂₀, tel qu'un radical alkyle en C₁ à C₈ ramifié, aryle en C₆ à C₁₈, alkylènearyle en C₇ à C₂₀, un radical alcényle en C₂ à C₂₀ cyclique ou acyclique, ou forment un cycle saturé, insaturé ou aromatique, des radicaux identiques R¹ à R⁸ dans les différentes formules I à VI pouvant présenter une signification différente, n pouvant valoir 0 à 5 et contenant 0 à 99,9% en poids, par rapport à la masse totale du copolymère de cyclooléfine, d'unités polymérisées qui sont dérivées d'une ou de plusieurs oléfines acycliques de formule VII, 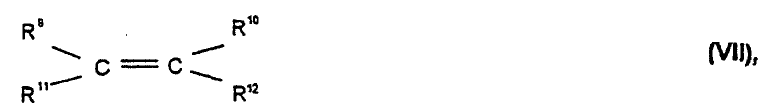 dans laquelle R⁹, R¹⁰, R¹¹ et R¹² sont identiques ou différents et signifient un atome d'hydrogène, un radical hydrocarboné en C₁ à C₂₀ linéaire, ramifié, saturé ou insaturé, tel qu'un radical alkyle en C₁ à C₈ ou un radical aryle en C₆ à C₈, et contenant 0 à 45% en poids, par rapport à la composition totale du copolymère de cyclooléfine, d'unités polymérisées qui sont dérivées d'une ou de plusieurs oléfines monocycliques de formule VIII, 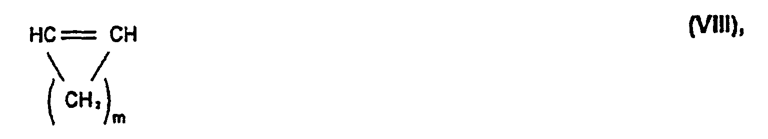 dans laquelle m représente un nombre de 2 à 10, **caractérisé en ce qu'**on réalise un usinage du matériau au moyen d'un rayonnement laser.

2. Procédé selon la revendication 1, **caractérisé en ce qu'**on utilise des copolymères de cyclooléfine qui sont préparés par polymérisation avec conservation du cycle des monomères polycycliques.

3. Procédé selon la revendication 1 ou 2, **caractérisé en ce qu'**on utilise des copolymères de cyclooléfine qui contiennent 0,1 à 99,9% en poids, par rapport à la masse totale du polymère de cyclooléfine, d'unités polymérisées qui sont dérivées d'au moins une oléfine polycyclique des formules I, II, II', III, IV, V ou VI, et 0 à 99,9% en poids, par rapport à la masse totale du copolymère de cyclooléfine, d'unités polymérisées qui sont dérivées d'au moins une oléfine acyclique de formule VII.

4. Procédé selon l'une ou plusieurs des revendications 1 à 3, les copolymères de cyclooléfine contenant des unités polymérisées qui sont dérivées d'une ou de plusieurs oléfines polycycliques des formules I ou III et d'une ou de plusieurs α-oléfines comprenant 2 à 20 atomes de carbone.

5. Procédé selon l'une ou plusieurs des revendications 1 à 4, les copolymères de cyclooléfine représentant des copolymères de norbornène/éthylène ou de tétracyclodécène/éthylène.

6. Procédé pour la préparation de pièces microstructurées, selon l'une ou plusieurs des revendications 1 à 5, **caractérisé en ce qu'**on utilise un rayonnement laser présentant une longueur d'onde inférieure ou égale à 350 nm.

7. Procédé selon l'une ou plusieurs des revendications 1 à 6, **caractérisé en ce que** la densité énergétique du rayonnement laser est réglée à plus de ou est égale à 1,0 J/cm², de préférence à plus de ou égale à 1,5 J/cm².

8. Utilisation de pièces microstructurées qui ont été préparées selon l'un ou plusieurs des procédés des revendications 1 à 7 dans les domaines de l'automobile, de l'information et de la communication, de la technique médicale, de la technique de procédé chimique et de la biotechnologie.

9. Utilisation de pièces microstructurées qui ont été préparées selon l'un ou plusieurs des procédés des revendications 1 à 7 pour des utilisations micro-optiques ou optiques de diffraction, pour des pièces médicales et biotechniques, telles que l'électrophorèse capillaire.

10. Utilisation de pièces microstructurées qui ont été préparées selon l'un ou plusieurs des procédés des revendications 1 à 7, pour des capteurs ou des systèmes de régulation, des systèmes pour le transfert et le traitement optique de données, tels que des coupleurs, des raccords, des éléments pour la déviation de trajectoires de rayons et des commutateurs optiques, des accumulateurs de données, des systèmes pour la projection d'images en mouvement, des microlentilles, des systèmes diagnostiques, des systèmes d'atomisation pour des inhalateurs, des micropompes pour des systèmes d'infusion, des implants les plus divers, des systèmes pour la chirurgie invasive minimale, des mélangeurs statiques, des pompes, des systèmes de dosage et de filtration et des soupapes.
